# EUROPEAN PATENT SPECIFICATION

(11) **EP 2 341 221 B1**
(45) Date of publication and mention of the grant of the patent: **14.08.2013**
(21) Application number: 10380156.9
(22) Date of filing: 15.12.2010
(51) Int. Cl.: F02F 7/00, F02F 1/24, F01L 1/053, F16B 5/02

(54) **Device for mounting the cylinder head of an engine**
Montagevorrichtung für den Zylinderkopf eines Motors
Dispositif de montage de culasse d'un moteur

(30) Priority: 23.12.2009 WO PCT/ES2009/070622
(43) Date of publication of application: 06.07.2011
(73) Proprietor: Amadeo Marti Carbonell S.A., 12520 Nules Castellón (ES)
(72) Inventor: Marti Ogayar, Amadeo, 12520 Nules (Castellón) (ES); Marti Ogayar, Sergio, 12520 Nules (Castellón) (ES)
(74) Representative: Ungria López, Javier

(56) References cited:
- EP-A1- 0 098 180
- EP-A1- 0 372 587
- EP-A1- 0 848 158
- EP-A1- 1 086 300
- EP-A1- 1 312 772
- EP-A1- 1 541 863
- EP-A2- 0 228 533
- EP-A2- 0 735 267
- DE-B- 1 168 164
- DE-C- 660 682
- US-A- 3 022 775
- US-A- 3 563 131

## Description

### OBJECT OF THE INVENTION

The present invention, as this specification states in its title, relates to a device for mounting the cylinder head of an engine intended for anchoring the cylinder head assembly to the engine block, in addition to allow further mounting other integral parts and pieces of the cylinder head, by using one-piece fixing elements that will be housed into faced holes of the cylinder head assembly and engine block.

Therefore, the objective of the invention are some characteristic one-piece fixing elements for connecting the cylinder head body to the engine block in solidarity, each of which further includes means for allowing mounting and fixing other additional integral parts or pieces of the cylinder head assembly.

### BACKGROUND OF THE INVENTION

Currently, internal combustion engines comprise a cylinder head that is connected to the engine block by using several fixing elements, the German Invention Patent with European publication number EP1086300 being known, for example.

This document basically describes a fixation of a cylinder head to the engine block by using pairs of screws in one direction, a lower one threaded into the engine block and another upper one threaded into the head of the lower screw, so that this type of mounting allows fixing additional components of the cylinder head.

On the other hand, it should be noted that the fixation between the cylinder head body and engine block by using one-piece threaded elements of great length is of public domain, so that each of which is arranged in a corresponding direction with threaded or non-threaded bores or holes of the engine block and cylinder head, respectively. These one-piece threaded elements do not allow fixing other additional parts or pieces of the cylinder head.

The inventions disclosed in DE 660682 C, EP 1312772 A1, EP 0848158 A1 and EP 0735267 A2 disclose different embodiments of devices for mounting the cylinder head of an engine that make use of one-piece fixing elements but said inventions show important differences with the present invention.

### DESCRIPTION OF THE INVENTION

In order to achieve the objectives and avoid the drawbacks mentioned in the preceding paragraphs, the invention proposes a device for mounting the cylinder head of an engine, being of the type which uses one-piece long fixing elements for connecting the cylinder head body to the engine block in solidarity.

It is characterized in that each of the one-piece fixing elements comprises a lower portion with a lower threaded section to be screwed into the engine block in correspondence with a threaded hole, an intermediate thickening or lip including a means for tightening the one-piece fixing element assembly and an upper portion with an upper threaded section wherein at least one end nut for fixing additional pieces or parts to the head cylinder body is coupled.

The base free of intermediate thickening abuts against an upper area of the cylinder head body with the insertion of an intermediate washer for immobilizing said cylinder head body against the engine block itself when the one-piece fixing element assembly is rotated by using a suitable tool until reaching the maximum tightening torque, tool through which the one-piece fixing element is rotated until reaching said torque.

When tightening the end nuts for fixing the additional pieces or parts to the cylinder head body a washer can be sandwiched, being also possible to incorporate an extension for replacing the washer in the end nut itself. In any case the washers used in conjunction with the end nut have a height such that prevent the base of said nut from abuts, in its maximum tightening torque, against the cylinder head pieces, such as for example an additional piece wherein the rocker arm shaft is coupled.

On the other hand, the tightening means may for example consist of a hexagonal, dodecagonal head torque type, or any other configuration according to the appropriate tightening tool.

The means for tightening the one-piece fixing element assembly could also be located in the free end of the upper portion of such one-piece fixing element.

Next, in order to facilitate a better understanding of this specification and being an integral part thereof, some figures wherein with an illustrative and not limitative manner the object of the invention has been represented, are attached.

### BRIEF DESCRIPTION OF THE DRAWINGS

Figure 1. - Shows a sectional view wherein the fixation between a cylinder head and engine block by using the device for mounting the cylinder head of an engine, object of the invention, is shown. The device fixes the cylinder head body and also other additional parts or pieces of the cylinder head assembly. It basically comprises characteristic one-piece fixing elements.
Figure 2. - Shows a view similar to the previous one with some variations.
Figures 3 and 4. - Show end fixations of additional pieces of the cylinder head assembly wherein the characteristic one-piece fixing elements are included.
Figure 5. - Shows a view of a one-piece fixing element constituting the device of the invention.

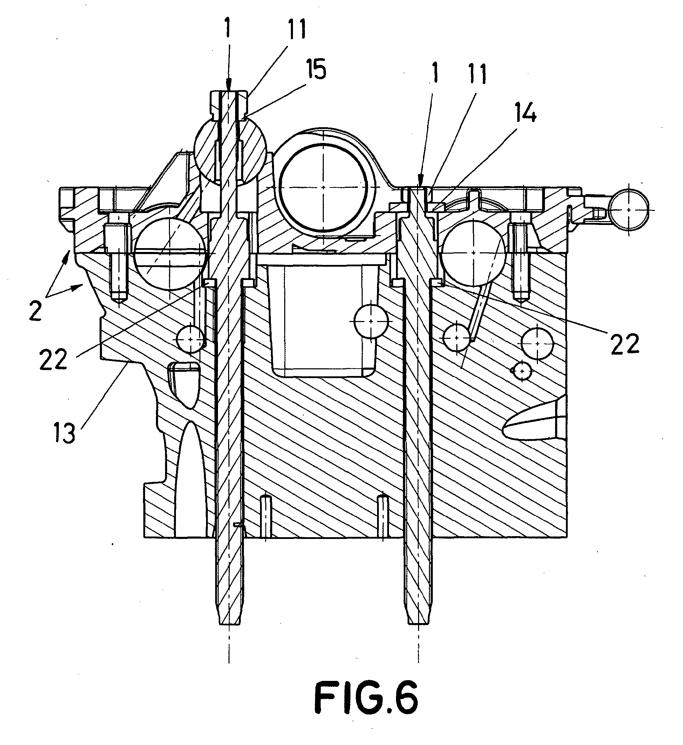

Figure 6. - Shows another sectional view of the device of the invention.

### DESCRIPTION OF THE PREFERRED EMBODIMENT

Considering the numbering adopted in the figures, the device for mounting the cylinder head of an engine comprises one-piece long fixing elements 1 through which the cylinder head 2 assembly is connected to an engine block 3 in solidarity.

For this purpose, each one-piece fixing element 1 comprises in the first place a lower portion 4 with a lower threaded end section 5 to be screwed into the engine block 3; in second place an intermediate thickening or lip 6 including a polygonal tightening head 7 and a stopping body 8; and in third place an upper portion 9 including an upper threaded end section 10 wherein an end nut 11 for fixing additional parts or pieces 12 to the cylinder head body 13, such as for example a rocker arm shaft support, is coupled.

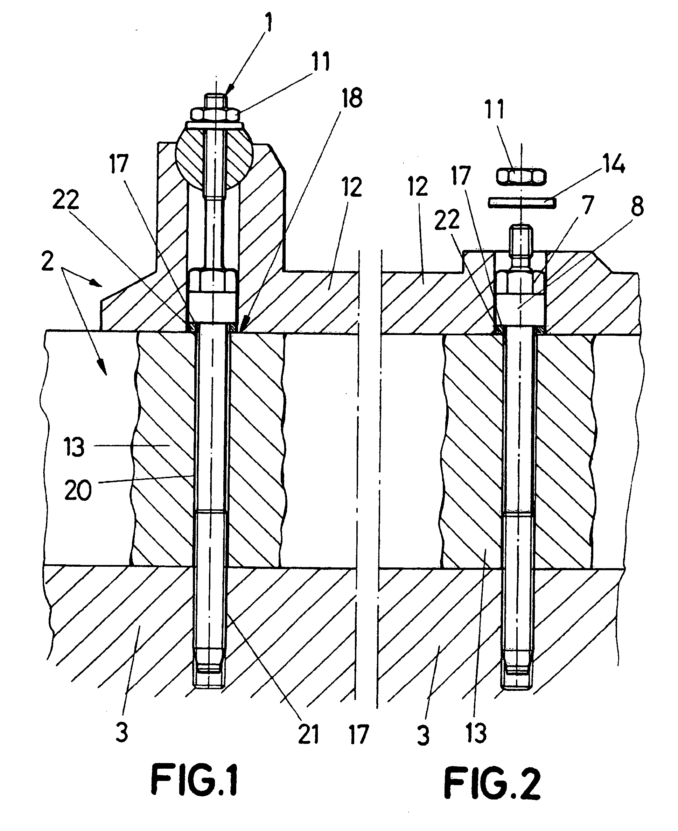

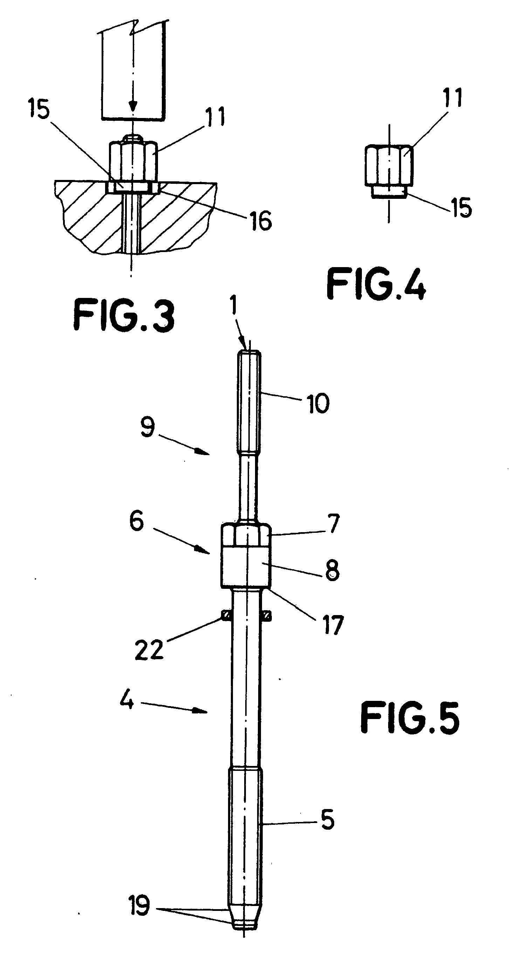

When tightening the end nut 11 for fixing the additional pieces 12 a washer 14 can be sandwiched, as shown for example in Figure 2, or an annular extension 15 solidly connected to the end nut 11 itself can be included for replacing thereof, as shown more clearly in Figure 3, which annular extension 15 could be housed into a recess 16 of said additional pieces 12.

The annular free base 17 of the stopping body 8 of the intermediate lip 6 abuts against an upper area 18 of the cylinder head body 13, with the insertion of an intermediate washer 22, for ensuring its immobilization against the engine block 3 when the one-piece element assembly 1 is rotated by using a suitable tool acting therewith on the tightening head 7.

At a later stage, the additional pieces 12 of the cylinder head 2, which will sit on the cylinder head body 13 thus ensuring their fixing by using the end nuts 11, will be mounted.

Finally, it should be mentioned that the lower threaded end section 5 of the lower portion 4 ends in a narrow part 19 formed by a conical part and a cylindrical end. Thus, the initial threaded coupling of the one-piece fixing elements 1 to the engine block 3 is facilitated.

The cylinder head body 13 and engine block 3 have faced holes 20 and 21 into which the respective one-piece fixing elements 1 are housed, the holes 21 of the engine block 3 having a thread for screwing such one-piece fixing elements 1.

Finally, it should be mentioned that the contour of the stopping body 8 of the intermediate lip 6 does not protrude in relation to the contour of the tightening head 7 which is also part of the same intermediate lip 6.

## Claims

1. DEVICE FOR MOUNTING THE CYLINDER HEAD OF AN ENGINE, the device comprising a cylinder head body (13) and an engine block (3) and including elongated one-piece fixing elements with thread for fixing the cylinder head to the engine block, both having faced holes into which such one-piece fixing elements are housed, each of these one-piece fixing elements (1) comprising:
- a lower portion (4) with a lower threaded section (5) to be screwed into the threaded hole (21) of the engine block (3);
- an intermediate lip (6), the intermediate lip (6) comprising a tightening head (7) as means for tightening the one-piece fixing element (1) and a stopping body (8) for abutting the annular free base (17) of the intermediate lip (6);
- means for tightening the one-piece fixing element (1);
- an upper portion (9) including an upper threaded end section (10) wherein at least one end nut (11) is coupled and fixes additional pieces (12) to the cylinder head body (13),
**characterized in that** the annular free base (17) of the annular intermediate lip (6) is abutting against an upper area (18) of the cylinder head body (13) when the one-piece fixing element (1) is tighten, by rotating the one-piece fixing element (1) in the proper direction until reaching the required tightening torque and the additional pieces (12) include a rocker arm shaft support.

2. DEVICE FOR MOUNTING THE CYLINDER HEAD OF AN ENGINE, according to claim 1, **characterized in that** the tightening head (7) comprises a polygonal structure.

3. DEVICE FOR MOUNTING THE CYLINDER HEAD OF AN ENGINE, according to any one of preceding claims, **characterized in that** a washer (14) is sandwiched when fixing additional pieces (12) by using the end nut (11).

4. DEVICE FOR MOUNTING THE CYLINDER HEAD OF AN ENGINE, according to any one of claims 1 or 2, **characterized in that** the end nut (11) for fixing additional pieces (12) includes an annular extension (15) abutting against such additional pieces (12).

5. DEVICE FOR MOUNTING THE CYLINDER HEAD OF AN ENGINE, according to any one of preceding claims, **characterized in that** the intermediate lip (6) abuts against the cylinder head body (13) with the insertion of an intermediate washer (22).

6. DEVICE FOR MOUNTING THE CYLINDER HEAD OF AN ENGINE, according to any one of preceding claims, **characterized in that** the contour of the stopping body (8) of the intermediate lip (6) does not protrude in relation to the contour of the tightening head (7) which is also part of the same intermediate lip (6).

## Patentansprüche

1. Vorrichtung zur Montage des Zylinderkopfes von einem Motor, wobei die Vorrichtungen einen Zylinderkopfkörper (13) und einen Motorblock (3) umfasst sowie längliche einteilige Befestigungselemente mit einem Gewinde zur Befestigung des Zylinderkopfes an dem Motorblock umfasst, wobei beide gegenüberliegende Bohrungen aufweisen, in welchen diese einteiligen Befestigungselemente untergebracht sind, wobei jedes dieser einteiligen Befestigungselemente (1) umfasst:
- einen unteren Teil (4) mit einem unteren Gewindeabschnitt (5) zum Einschrauben in die Gewindebohrung (21) des Motorblocks (3);
- einen Zwischenvorsprung (6), wobei der Zwischenvorsprung (6) einen Spannkopf (7) als Mittel zum Festspannen des einteiligen Befestigungselements (1) und einen Stopperkörper (8) zum Anlegen des ringförmigen freien Bodens (17) des Zwischenvorsprungs (6) umfasst;
- Mittel zum Festspannen des einteiligen Befestigungselements (1);
- einen oberen Teil (9) mit einem oberen Gewindeendabschnitt (10), mit welchem mindestens eine Endmutter (11) verbunden ist, die Zusatzteile (12) an dem Zylinderkopfkörper (13) befestigt,
**dadurch gekennzeichnet, dass** der ringförmige freie Boden (17) des ringförmigen Zwischenvorsprungs (6) an einem oberen Bereich (18) des Zylinderkopfkörpers (13) anliegt, wenn das einteilige Befestigungselement (1) durch eine Drehung dessen in die richtige Richtung bis zum Erreichen des erforderlichen Spannmoments fest gespannt wird, und dass die Zusatzteile (12) einen Kipphebelwellenträger umfassen.

2. Vorrichtung zur Montage des Zylinderkopfes von einem Motor nach Anspruch 1, **dadurch gekennzeichnet, dass** der Spannkopf (7) eine vieleckige Struktur umfasst.

3. Vorrichtung zur Montage des Zylinderkopfes von einem Motor nach einem der vorhergehenden Ansprüche, **dadurch gekennzeichnet, dass** eine Unterlagscheibe (14) eingelegt wird, wenn die Zusatzteile (12) unter Verwendung der Endmutter (11) befestigt werden.

4. Vorrichtung zur Montage des Zylinderkopfes von einem Motor nach einem der Ansprüche 1 oder 2, **dadurch gekennzeichnet, dass** die Endmutter (11) zur Befestigung von Zusatzteilen (12) einen ringförmigen Fortsatz (15) umfasst, der an diesen Zusatzteilen (12) anliegt.

5. Vorrichtung zur Montage des Zylinderkopfes von einem Motor nach einem der vorhergehenden Ansprüche, **dadurch gekennzeichnet, dass** der Zwischenvorsprung (6) unter Einfügung einer Zwischenunterlagscheibe (22) an dem Zylinderkopfkörper (13) anliegt.

6. Vorrichtung zur Montage des Zylinderkopfes von einem Motor nach einem der vorhergehenden Ansprüche, **dadurch gekennzeichnet, dass** der Umriss des Stopperkörpers (8) des Zwischenvorsprungs (6) nicht über den Umriss des Spannkopfes (7) hinaus steht, der auch Teil desselben Zwischenvorsprungs (6) ist.

## Revendications

1. Dispositif pour monter la culasse d'un moteur, le dispositif comprenant un corps de culasse (13) et un bloc moteur (3) et incluant des éléments de fixation en une pièce allongés avec un filetage pour fixer la culasse sur le bloc moteur, les deux ayant des trous correspondants dans lesquels de tels éléments de fixation en une pièce sont logés, chacun de ces éléments de fixation en une pièce (1) comprenant :
une partie inférieure (4) avec une section inférieure filetée (5) destinée à être vissée dans le trou fileté (21) du bloc moteur (3) ;
une lèvre intermédiaire (6), la lèvre intermédiaire (6) comprenant une tête de serrage (7) comme moyens pour serrer l'élément de fixation en une pièce (1) et un corps d'arrêt (8) pour venir en butée sur la base libre annulaire (17) de la lèvre intermédiaire (6) ;
des moyens pour serrer l'élément de fixation en une pièce (1) ;
une partie supérieure (9) incluant une section d'extrémité filetée supérieure (10) dans lequel au moins un écrou d'extrémité (11) est couplé et fixe des pièces supplémentaires (12) sur le corps de culasse (13),
**caractérisé en ce que** la base libre annulaire (17) de la lèvre intermédiaire (6) annulaire vient en butée contre une surface supérieure (18) du corps de culasse (13) quand l'élément de fixation en une pièce (1) est serré, en faisant tourner l'élément de fixation en une pièce (1) dans la direction correcte jusqu'à atteindre le couple de serrage requis et les pièces supplémentaires (12) incluent un support d'axe de culbuteur.

2. Dispositif pour monter la culasse d'un moteur selon la revendication 1, **caractérisé en ce que** la tête de serrage (7) comprend une structure polygonale.

3. Dispositif pour monter la culasse d'un moteur selon l'une quelconque des revendications précédentes, **caractérisé en ce qu'**une rondelle (14) est prise en sandwich lors de la fixation des pièces supplémentaires (12) en utilisant l'écrou d'extrémité (11).

4. Dispositif pour monter la culasse d'un moteur selon l'une quelconque des revendications 1 et 2, **caractérisé en ce que** l'écrou d'extrémité (11) pour fixer les pièces supplémentaires (12) inclut une extension annulaire (15) venant en butée contre de telles pièces supplémentaires (12).

5. Dispositif pour monter la culasse d'un moteur selon l'une quelconque des revendications précédentes, **caractérisé en ce que** la lèvre intermédiaire (6) vient en butée contre le corps de culasse (13) avec l'insertion d'une rondelle intermédiaire (22).

6. Dispositif pour monter la culasse d'un moteur selon l'une quelconque des revendications précédentes, **caractérisé en ce que** le contour du corps d'arrêt (8) de la lèvre intermédiaire (6) ne fait pas saillie en relation au contour de la tête de serrage (7) qui fait aussi partie de la même lèvre intermédiaire (6).
